# EUROPEAN PATENT SPECIFICATION

(11) **EP 0 608 195 B1**
(45) Date of publication and mention of the grant of the patent: **23.10.1996**
(21) Application number: 94610006.2
(22) Date of filing: 20.01.1994
(51) Int. Cl.: F28F 27/00, F28F 3/08

(54) **Plate heat exchanger and heat exchanger system with plate heat exchanger**
Platten-Wärmetauscher und Anlage mit einem Platten-Wärmetauscher
Echangeur de chaleur à plaques et système avec échangeur de chaleur à plaques

(30) Priority: 21.01.1993 DK 44/93
(43) Date of publication of application: 27.07.1994
(73) Proprietor: H.S. TARM A/S, 6880 Tarm (DK)
(72) Inventor: Nielsen, Ole, DK-6880 Tarm (DK)
(74) Representative: Lund, Preben

(56) References cited:
- DE-A- 2 706 090
- DE-C- 916 294
- US-A- 3 106 243

## Description

The invention relates to a plate heat exchanger for the transfer of thermal energy from one medium to another and a heat exchanger system using such a plate heat exchanger.

Today plate heat exchangers are already used extensively for the transfer of thermal energy from a first medium to a second medium in connection with the heating of accomodation units. The first medium can be district heating water and the present invention is hereafter explained in connection with district heating plants. However, it will be obvious to a person skilled in the art that the new plate heat exchanger can be used for many other purposes and that the media do not necessarily have to be water.

It is known to produce plate heat exchangers by coupling a number of plates together, which plates are either assembled by means of packings between the plates or by deforming the heat exchanger plates suitably, so that they can be soldered together by means of intermediate copper layers. During the assembly the desired flow paths are formed, and the flow paths which are not to be used are blocked. Usually a number of heat exchanger plates are assembled in a group, a so-called "stroke". If the plates are assembled to form a so-called parallel flow heat exchanger, it is possible to use identical heat exchanger plates, which production-wise is an advantage. If a so-called diagonal flow heat exchanger is needed, at least two different kinds of plates are required in a soldered construction and at least two different packings are required in a packing construction.

In order for plate heat exchangers to have suitable dimensions they are usually assembled as so-called two-stroke heat exchangers, where the direction of flow in the two strokes is opposite. In plate heat exchangers of the above type the pipe stubs from the same medium will always be placed opposite each other.

If, for example plate heat exchangers are used for district heating of an accomodation unit, be it heating of water for consumption and/or heating, the flow through the heat exchanger is controlled by means of a quick-action thermostatic valve or a slow-action thermostatic valve with a diaphragm unit. When it is a question of water for consumption, it is important to obtain immediate stoppage of the flow in the district heating medium when no more heating is required. Such a valve with a diaphragm unit is costly and complicated, but it is necessary because a thermostatic valve alone does not cause an immediate stoppage of the flow, as the thermo sensor of the valve measures the temperature of the water for consumption. However, an immediate stoppage of the water flow is necessary because the district heating water will otherwise be able to circulate and thus enter the heat exchanger, where it will cool while the water for consumption is heated up. As a result, lime will deposit in the heat exchanger which will eventually clog-up. A natural consequence of this is a useless waste of heat.

US-A-3,106,243 describes a plate heat exchanger which is constructed in such a way that it is possible to choose and guide the flow from an increased number of available corner ducts. The document does not teach how to make an immediate adjustment of the flow of the heating medium as a function of the temperature of the heated medium. Consequently, there is a risk of insufficient heating or of superheating of the media in question. As to the latter, this would cause a waste of heat.

By configuring the plate heat exchanger as disclosed in the claims it becomes possible by means of a single thermo sensor, which for example controls an ordinary thermostatic valve, to obtain immediate stoppage of the water flow without using a costly and complicated diaphragm unit for the valve. The costs of the heat exchanger installation in the heat exchanger system are hereby reduced and it is moreover technically simplified. If the plate heat exchanger is arranged as disclosed in the claims, it becomes possible to bring the pipe stubs of the one medium into line opposite the pipe stubs of the other medium. Thus, the possibility is provided of placing a single thermo sensor capable of detecting both the temperature of the medium 2 outlet from the heat exchanger, for example the temperature of the hot water for consumption, and the temperature of the medium 1 outlet from the heat exchanger, for example the outlet temperature of the district heating water. As soon as one of these temperatures is sufficiently high, the thermostatic valve will completely stop the inlet of district heating water. Thus, as an example, if the consumption of hot water is immediately stopped as soon as the consumption ceases and the hot water tap is turned off, the heat transfer in the plate heat exchanger is no longer needed and the district heating water will thus pass through the heat exchanger at full temperature and the temperature sensor will immediately detect this and cut off any further flow of district heating water.

In addition to this the claims disclose further advantageous embodiments of the plate heat exchanger and a heat exchanger system with such a plate heat exchanger.

### The drawing

An embodiment example of a plate heat exchanger according to the invention will hereafter be described in closer detail with reference to the drawing, in which
- fig. 1: is a principle drawing of the plate heat exchanger according to the invention and with flow indications, and
- fig. 2: shows sketchily the plate heat exchanger in fig. 1 in assembled condition, partially transparent and in the direction II-II in fig. 1.

### Description of the embodiment example

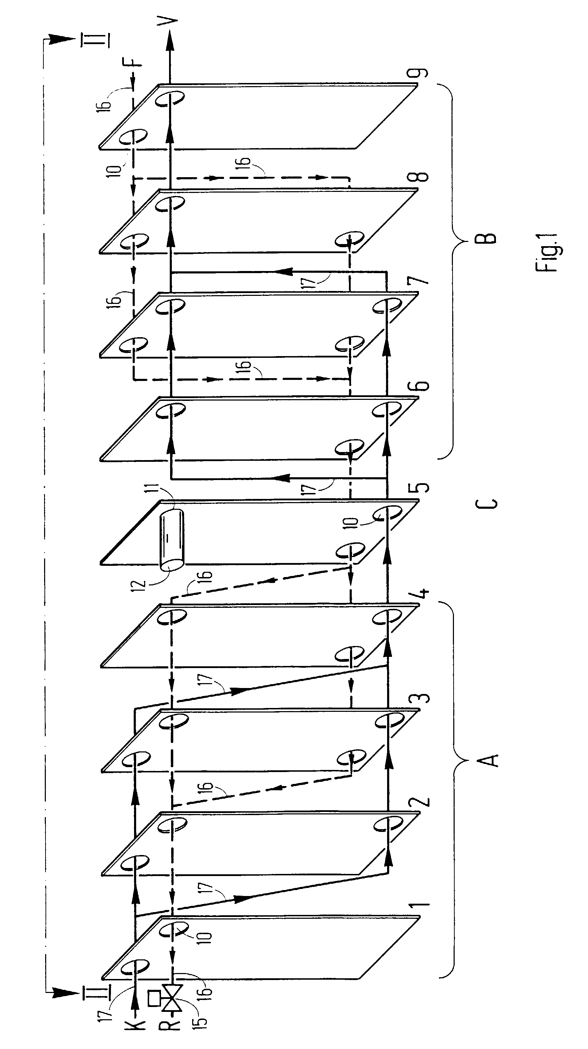

Fig. 1 of the drawing shows a number of heat exchanger plates, namely nine, marked 1-9 and arranged in two groups, A and B, and assembled by means of a central plate C, marked 5.

The heat exchanger plates in group A are coupled together to form a heat exchanger with diagonal flow, whereas the plates in group B are coupled together to form a heat exchanger with parallel flow.

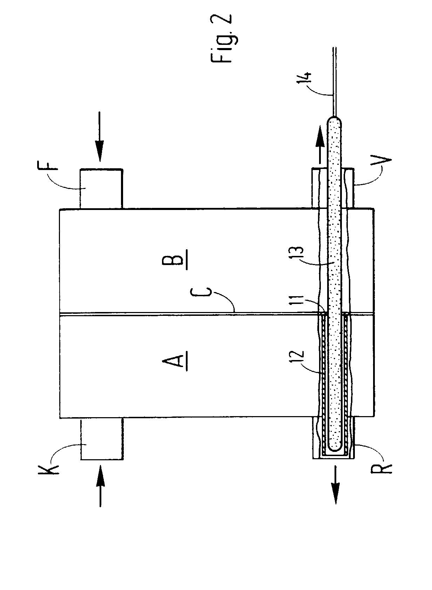

Besides, fig. 1 is a principle drawing, the purpose of which is to explain the flow through the plate heat exchanger and it will be obvious to a person skilled in the art that the plates can be assembled to form a compact heat exchanger as shown in fig. 2 by using either copper joints or packings, all in a known manner.

The flow course in the heat exchanger in fig. 1 takes place between the plates 1-9, which in a known manner can be configured with ribs to control the flow. The coupling together of the individual heat exchanger areas is effected through the holes 10, where in a known manner limitations have been made by means of packings or by soldered joints.

The broken line 16 indicates the flow of district heating water, as the district heating water from the district heating supply is let in at the pipe stub F, passes the heat exchanger via the flow path 16 and leaves the heat exchanger through the outlet pipe stub R, where an ordinary thermostatic valve 15 has been placed in the outlet pipe. The function of the valve will be explained below. The valve can for example be a thermostatic valve of the make Danfoss, Type AVTB, cf. Danfoss' data sheet VD.52.B9.01, or a corresponding valve. Thus, in this example the district heating water is the first medium.

If the heat exchanger is used to heat up water for consumption, the water-for-consumption flow shown with a full-drawn line marked 17 is used. The cold water is introduced through the pipe stub K, follows the flow path 17 and leaves the heat exchanger as hot water for consumption through the pipe stub V.

In the central plate C there is a hole 11, to which is secured an immersion tube 12 which is closed at the bottom. The immersion tube 12 has smaller dimensions than the holes 10 and can thus pass through the holes 10 in group A when the heat exchanger plates are to be assembled, see fig. 2.

A sensor 13 with a capillary tube 14 being coupled to the valve 15 in fig. 1 is introduced through the pipe stub V, so that the sensor 13 extends into the immersion tube 12 via the opening 11 as shown. The immersion tube 12 is washed by the return water in the first medium, i.e. the district heating water.

The sensor 13 can thus at once detect the temperature in the flow through the pipe stubs V and R in fig. 2. The sensor 13 is for example a sensor according to Danfoss' data sheet VD.52.B9.01 with a measuring range of 20-60°C or a corresponding sensor element.

Besides, a certain adjustment of the reaction speed of the sensor can be made when the sensor is positioned in the heat exchanger, including how far the sensor is inserted into the immersion tube and how far the immersion tube is extracted.

The positioning of the sensor is possible, because the heat exchanger comprises at least one group A with diagonal flow and at least one group B with parallel flow in such a manner that the pipe stubs for the first medium, R and V, can be placed opposite each other, so that the sensor 13 can be positioned as shown.

## Claims

1. A plate heat exchanger for the transfer of thermal energy from one medium (16), for example district heating water, to another medium (17), for example water for consumption or for heating, and comprising a number of heat exchanger plates (1-9) being coupled together to form a heat exchanger, in that
a) at least one group (A) of heat exchanger plates (1-4) is arranged for diagonal flow,
b) at least one group (B) of heat exchanger plates (6-9) is arranged for parallel flow,
**characterized** in that
c) at least one additional heat exchanger plate (C, 5) is placed between the above groups and comprises an immersion tube (12) arranged to pass through the heat exchanger plates in one of the above two groups, which immersion tube is arranged to contain a common temperature sensor (13), and
d) that the single thermosensor (13) common for both media (16, 17), thus positioned that it can detect the temperature of both media, so that as soon as one of these temperatures is sufficiently high, a thermostatic valve (15) will stop the inlet of the one medium (16).

2. A plate heat exchanger according to claim 1, **characterized** in that all heat exchanger plates (1-9) have an opening (10, 11) which openings are in line with each other and in which the immersion tube (12) of the additional heat exchanger plate (C) can be introduced, which openings provide space for the sensor (13) to be thus positioned that it can detect the temperature of both media (16, 17) simultaneously.

3. A plate heat exchanger according to claim 1 or 2, **characterized** in that the openings (10, 11) and the immersion tube (12) for the sensor (13) comprise the outlet openings (R, V) for each of the two media (16, 17).

4. A heat exchanger system with a plate heat exchanger according to any one of the claims 1-3, **characterized** in that the thermostatic valve (15) is provided in connection with one of the outlet openings (R, V) for one of the media (16, 17).

5. A heat exchanger system according to claim 4 and where the system is a heat exchanger system for the heating of hot water for consumption or for heating from district heating water, **characterized** in that the valve (15) is placed in the pipe for district heating return water (R) from the heat exchanger to the district heating system, and where the sensor (13) is positioned in the immersion tube of the heat exchanger and in the aligning openings (10, 11), so that the sensor can detect both the temperature of the return water (R) and the temperature of the hot water for consumption or heating (V).

## Patentansprüche

1. Platten-Wärmetauscher, zur Übertragung von Wärmeenergie von einem Medium (16), beispielsweise ferngeheiztes Wasser, auf ein anderes Medium (17), beispielsweise Wasser zum Verbrauch oder zum Wärmen, und der eine Anzahl von Wärmeaustauscherplatten (1-9) umfaßt, die miteinander gekoppelt sind, um einen Wärmetauscher zu bilden, wobei
a) mindestens eine Gruppe (A) von Wärmetauscherplatten (1.4) für eine diagonale Strömung angeordnet ist,
b) mindestens eine Gruppe (B) von Wärmetauscherplatten (6-9) für eine parallele Strömung angeordnet sind,
**dadurch gekennzeichnet**, daß
c) mindestens eine zusätzliche Wärmetauscherplatte (C, 5) zwischen den obengenannten Gruppen angeordnet ist und ein Eintauchrohr (12) umfaßt, das angeordnet ist, daß es durch die Wärmetauscherplatten in einer der obigen zwei Gruppen hindurchgeht, wobei das Eintauchrohr angeordnet ist, daß es einen gemeinsamen Temperaturfühler (13) enthält, und
d) wobei der einzelne für beide Medien (16, 17) gemeinsame Wärmefühler (13) derart positioniert ist, daß er die Temperatur beider Medien bestimmen kann, so daß, sobald eine dieser Temperaturen ausreichend hoch ist, ein thermostatisches Ventil (15) den Einlaß des einen Mediums (16) anhält.

2. Ein Platten-Wärmetauscher, gemäß Anspruch 1, **dadurch gekennzeichnet**, daß alle Wärmetauscherplatten (1-9) eine Öffnung (10, 11) haben, wobei die Öffnungen in Reihe ausgerichtet sind und in sie das Eintauchrohr (12) der zusätzlichen Wärmetauscherplatte (C) eingeführt werden kann, wobei die Öffnungen einen Raum für den Fühler (13) vorsehen, damit er derart positioniert wird, daß er die Temperatur beider Medien (16, 17) gleichzeitig erfassen kann.

3. Ein Platten-Wärmetauscher, gemäß Anspruch 1 oder 2, **dadurch gekennzeichnet**, daß die Öffnungen (10, 11) und das Eintauchrohr (12) für den Fühler (13) die Auslaßöffnungen (R, V) für jedes der zwei Medien (16, 17) umfassen.

4. Ein Wärmetauschersystem mit einem Platten-Wärmetauscher, gemäß irgendeinem der Ansprüche 1-3, **dadurch gekennzeichnet**, daß das thermostatische Ventil (15) in Verbindung mit einer der Auslaßöffnungen (R, V) für eines der Medien (16, 17) vorgesehen ist.

5. Ein Wärmetauschersystem gemäß Anspruch 4 und wo das System ein Wärmetauschersystem zum Erwärmen von heißem Wasser zum Verbrauch oder zum Heizen mit ferngeheiztem Wasser ist, **dadurch gekennzeichnet**, daß das Ventil (15) in dem Rohr für das ferngeheizte Rücklaufwasser (R) von dem Wärmetauscher zu dem Fernheizungssystem angeordnet ist, und wo der Fühler (13) in dem Eintauchrohr des Wärmetauschers und in den ausgerichteten Öffnungen (10, 11) angeordnet ist, so daß der Sensor die Temperatur des Rücklaufwassers (R) und die Temperatur des heißen Wassers zum Gebrauch oder Heizen (V) erfassen kann.

## Revendications

1. Echangeur de chaleur à plaques pour le transfert de l'énergie thermique d'un premier milieu (16), par exemple l'eau du chauffage urbain, à un deuxième autre milieu (17), par exemple l'eau pour la consommation ou pour le chauffage, et comprenant un certain nombre de plaques d'échange thermique (1-9) raccordées ensemble pour former un échangeur thermique, dans lequel :
(a) au moins un groupe (A) de plaques d'échange thermique (1-4) est disposé pour assurer un écoulement en diagonale,
(b) au moins un groupe (B) de plaques d'échange thermique (6-9) est disposé pour assurer un écoulement en parallèle,
caractérisé en ce que :
(c) au moins une plaque d'échange thermique additionnelle (C, 5) est placée entre les groupes précités et comprend un tube d'immersion (12) disposé pour passer à travers les plaques d'échange thermique dans l'un des deux groupes ci-dessus, lequel tube d'immersion est disposé pour contenir un capteur de température commun (13), et
(d) le seul capteur de température (13) commun aux deux milieux (16, 17) est disposé de telle sorte qu'il peut détecter la température des deux milieux, de sorte que, dès que l'une de ces températures est suffisamment élevée, une vanne thermostatique (15) arrête l'arrivée du premier milieu (16).

2. Echangeur thermique à plaques selon la revendication 1, caractérisé en ce que toutes les plaques d'échange thermique (1-9) ont une ouverture (10, 11), lesquelles ouvertures sont alignées les unes avec les autres et dans lesquelles le tube d'immersion (12) de la plaque d'échange thermique additionnelle (C) peut être introduite, lesquelles ouvertures procurent au capteur (13) l'espace nécessaire pour qu'il soit disposé de façon à pouvoir détecter simultanément la température des deux milieux (16, 17).

3. Echangeur thermique à plaques selon la revendication 1 ou la revendication 2, caractérisé en ce que les ouvertures (10, 11) et le tube d'immersion (12) pour le capteur (13) comprennent les ouvertures de sortie (R, V) pour chacun des deux milieux (16, 17).

4. Installation d'échangeur thermique avec un échangeur thermique à plaques selon l'une quelconque des revendications 1 à 3, caractérisée en ce que la vanne thermostatique (15) est prévue en liaison avec l'une des ouvertures de sortie (R, V) pour l'un des milieux (16, 17).

5. Installation d'échangeur thermique selon la revendication 4, prévue pour le chauffage de l'eau chaude destinée à la consommation ou pour le chauffage à partir de l'eau du chauffage urbain, caractérisée en ce que la vanne (15) est placée dans le tuyau de l'eau de retour du chauffage urbain (R) retournant de l'échangeur thermique au système de chauffage urbain, et en ce que le capteur (13) est positionné dans le tube d'immersion de l'échangeur thermique et dans les ouvertures alignées (10, 11) de telle sorte que le capteur peut détecter à la fois la température de l'eau de retour (R) et la température de l'eau chaude destinée à la consommation ou au chauffage (V).
